# EUROPÄISCHE PATENTANMELDUNG

(11) **EP 1 512 617 A2**
(43) Veröffentlichungstag der Anmeldung: **09.03.2005**
(21) Anmeldenummer: 04020749.0
(22) Anmeldetag: 01.09.2004
(51) Int. Cl.: B62J 1/18

(54) **Fahrradsattel**

(30) Priorität: 05.09.2003 DE 20313788 U
(71) Anmelder: Arnold, Franc, 56068 Koblenz (DE)
(72) Erfinder: Arnold, Franc, 56068 Koblenz (DE)
(74) Vertreter: von Kreisler Selting Werner

(57) **Zusammenfassung**

Ein Fahrradsattel weist einen Trägerkörper (10) auf. An einer Oberseite (18) des Trägerkörpers (10) ist eine Polsterschicht (20) vorgesehen. Zur besseren Belüftung weist die Polsterschicht (20) eine Abstandsgewirk-Schicht (22) auf.

## Beschreibung

Die Erfindung betrifft einen Fahrradsattel, insbesondere einen Sport-Fahrradsattel.

Fahrradsättel weisen einen Trägerkörper, wie eine Kunststoffschale, auf, wobei an der Unterseite des Trägerkörpers Halteelemente, wie Metallbügel, vorgesehen sind, um den Sattel beispielsweise mit einer Schelle o.dgl. an der Sattelstange zu befestigen. Ferner dient der Trägerkörper zum Tragen einer mit seiner Oberseite verbundenen Polsterschicht. Die Polsterschicht weist beispielsweise ein Schaumstoffpolster auf, das mit einer Material-Lage, wie Nylon, Kunstleder, Leder etc., überspannt ist. Bei bekannten Polsterschichten für Fahrradsättel besteht das Problem der Schweißbildung. Die Schweißbildung wird insbesondere durch das Vorsehen von Kunststofffasern verstärkt. Die Schweißbildung ist für den Fahrradfahrer unangenehm und kann ferner zu Hautirritationen führen.

Ein Fahrradsattel mit Belüftungsfunktion ist beispielsweise aus DE 201 01 780 bekannt. Zur Belüftung weist dieser Sattel im Schrittbereich einen Schlitz auf, wobei zusätzlich in den beiden voneinander getrennten Sattelhälften seitlich Lufteintrittslöcher vorgesehen sind. Durch diesen Sattel ist die Schweißbildung zwar vermindert, es findet jedoch weiterhin eine Schweißbildung an den Stellen statt, an denen der Körper den Fahrradsattel berührt.

Aufgabe der Erfindung ist es, einen Fahrradsattel zu schaffen, bei dem die Feuchtigkeitsbildung reduziert ist.

Die Lösung der Aufgabe erfolgt erfindungsgemäß durch die Merkmale des Anspruchs 1.

Bei dem erfindungsgemäßen Fahrradsattel weist die Polsterschicht eine Abstandsgewirk-Schicht auf. Bei der Polsterschicht handelt es sich um die den Fahrradsattel polsternde Schicht. Diese kann ausschließlich aus Abstandsgewirk bestehen oder eine Kombination unterschiedlicher Materialien, insbesondere einer Verbindung aus einer Polsterlage aus Schaumstoff oder dgl., und einer Abstandsgewirk-Schicht sein. Bei einem Abstandsgewirk handelt es sich um ein vorzugsweise verkettetes Material, das insbesondere KunststoffFasern aufweist. Diese Fasern sind im Wesentlichen senkrecht zu einer Oberseite und einer Unterseite des Abstandsgewirks angeordnet. Hierbei kann als Oberseite und Unterseite eine geeignete Material-Lage vorgesehen sein. Durch die im Wesentlichen senkrechte Anordnung der Fasern, die vorzugsweise aus einem elastischen Kunststoff bestehen, kann von einem Abstandsgewirk Druck aufgenommen werden, so dass das Abstandsgewirk entsprechend eines Polsters eine elastische Polsterung bewirkt. Gegenüber herkömmlichen Polstern, die beispielsweise aus Schaumstoff hergestellt sind, weist das Abstandsgewirk den Vorteil auf, dass es eine geringe Dichte aufweist und somit gut luftdurchlässig ist. Es ist somit möglich, durch das Vorsehen einer Abstandsgewirk-Schicht auf einer Trägerkörper-Oberseite eine Belüftung der Polsterschicht zu realisieren. Durch diese Belüftung erfolgt ein Feuchtigkeits-Abtransport. Ferner bewirkt die Belüftung eine geringere Schweißbildung. Ein derartiges Abstandsgewirk ist beispielsweise in DE 90 16 062 beschrieben.

Besonders bevorzugt ist die Verwendung eines Abstandsgewirks, das einen Feuchtigkeitstransport bewirken kann. Hierbei erfolgt der Feuchtigkeitstransport vom Körper des Radfahrers weg, d.h. in Richtung des Trägerkörpers des Fahrradsattels. Derartige Feuchtigkeit transportierende Abstandsgewirke weisen beispielsweise als Fasern zwischen einer Oberseite und einer Unterseite des Abstandsgewirks Feuchtigkeit transportierende, d.h. hydrophile Fasern auf. Derartige Abstandsgewirke sind beispielsweise in DE 196 35 170 und DE 199 10 785 beschrieben.

Erfindungsgemäß kann die Polsterschicht ausschließlich eine Abstandsgewirk-Schicht aufweisen. Die Abstandsgewirk-Schicht kann zusätzlich mit einer Material-Lage überspannt sein. Diese äußere Material-Lage ist vorzugsweise luftdurchlässig. Hierzu kann die Material-Lage perforiert sein oder auf Grund des Materials eine Atmungsaktivität aufweisen. Vorzugsweise ist diese Material-Lage zusätzlich feuchtigkeitsdurchlässig. Ggf. kann auch die eine Material-Lage oder Schicht des Abstandsgewirkes, die nach außen, d.h. von dem Trägerkörper des Fahrradsattels, weg weist, entsprechend der äußeren Material-Lage aufgebaut sein und ggf. die äußere Material-Lage bilden.

Das Vorsehen einer Abstandsgewirk-Schicht bei einem Fahrradsattel hat insbesondere den Vorteil, dass neben einer Polsterwirkung auch eine gute Belüftung möglich ist. Des weiteren hat Abstandsgewirk eine bessere punktuelle Druckaufnahme als beispielsweise Schaumstoff.

Vorzugsweise ist die Abstandsgewirk-Schicht in einem Sitzbereich, insbesondere im Bereich der Beckenknochen, angeordnet. Ggf. ist im Sitzbereich ein eine stärkere Dämpfung bzw. Polsterung aufweisendes Abstandsgewirk vorgesehen. Ebenso können im diesem Bereich auch mehrere Lagen Abstandsgewirk vorgesehen sein. Vorzugsweise erstreckt sich die Abstandsgewirk-Schicht zumindest über die gesamte Oberseite des Fahrradsattels. Ggf. kann auch seitlich am Fahrradsattel, d.h. in dem Bereich, in dem die Innenschenkel am Fahrradsattel anliegen, eine Abstandsgewirk-Schicht vorgesehen sein, so dass sich die Abstandsgewirk-Schicht über die gesamte Oberfläche des Trägerkörpers erstreckt.

Bei einer ersten besonders bevorzugten Ausführungsform der Erfindung ist die Polsterschicht mehrlagig und weist zumindest in Teilbereichen eine Polsterlage aus einem Schaumstoff oder anderem geeigneten Polstermaterial für Fahrradsättel sowie eine Abstandsgewirk-Lage auf. Diese Abstandsgewirk-Lage bzw. Abstandsgewirk-Schicht ist insbesondere an beispielsweise durch Beckenknochen stark belasteten Bereichen vorgesehen, kann aber auch die gesamte Oberfläche des Trägerkörpers des Sattels überspannen.

Da Polstermaterial häufig feuchtigkeitsempfindlich ist, ist vorzugsweise zwischen der Polsterlage und der Abstandsgewirk-Lage ein feuchtigkeitsabweisende Lage vorgesehen. Dies ist insbesondere wichtig, da bei einer bevorzugten erfindungsgemäßen Ausführungsform die Abstandsgewirk-Lage Feuchtigkeit vom Körper weg, d.h. in Richtung der Polsterlage transportiert. Bei der feuchtigkeitsabhaltenden Lage handelt es sich vorzugsweise um eine Membran, die zwar luft- und ggf. auch dampfdurchlässig, jedoch undurchlässig für Flüssigkeitstropfen, d.h. größere Mengen an Flüssigkeit ist. Beispielsweise kann es sich hierbei um eine einem Goretex-Material entsprechende Lage handeln.

Bei einer weiteren besonders bevorzugten Ausführungsform ist die Abstandsgewirk-Schicht in einem Rahmenelement angeordnet. Das Rahmenelement umgibt somit die Abstandsgewirk-Schicht, wobei das Rahmenelement auch Stege oder Sprossen aufweisen kann, durch die die Abstandsgewirk-Schicht stabilisiert bzw. in einzelne Teilschichten unterteilt wird. Vorzugsweise liegt bei dieser Ausführungsform die Abstandsgewirk-Schicht unmittelbar auf dem Trägerkörper des Fahrradsattels auf. Ggf. ist die Abstandsgewirk-Schicht von einer dünnen Materiallage, die die Oberfläche des Sattels bildet, überspannt. Die äußere Schicht des Sattelpolsters kann jedoch auch durch das Abstandsgewirk selbst gebildet sein. Durch das erfindungsgemäße Vorsehen eines Rahmenelementes kann die Lage der Abstandsgewirk-Schicht eindeutig definiert werden. Vorzugsweise ist das Rahmenelement derart angeordnet, dass es entlang des Sattelaußenrandes, d. h. entlang des Außenrandes des Trägerkörpers, verläuft. Dies hat den Vorteil, dass das Rahmenelement, das beispielsweise aus einem Polstermaterial, wie Schaumstoff, hergestellt ist, beispielsweise durch Warmumformen oder einen entsprechenden Zuschnitt eine exakte Formgebung erhalten kann. Dies ist bei Abstandsgewirk-Schichten nur schwer möglich. Gerade in diesem Bereich des Sattels ist eine exakte Formgebung jedoch zur Vermeidung von Druckstellen etc. erforderlich.

Ferner ist es möglich, eine Abstandsgewirk-Schicht bei sämtlichen vorstehend beschriebenen Ausführungsformen vorzusehen, die mehrlagig ist, so dass mehrere Abstandsgewirk-Schichten, die ggf. unterschiedliche Dämpfungseigenschaften aufweisen, übereinander angeordnet sind.

Um eine gute Belüftung der Polsterschicht, d.h. insbesondere durch die Abstandsgewirk-Schicht, zu ermöglichen, weist der Fahrradsattel vorzugsweise an der Sattelspitze eine Lufteintrittsfläche zur Luftzufuhr auf. Die Lufteintrittsfläche kann beispielsweise derart ausgebildet sein, dass eine Oberschicht oder die Abstandsgewirk-Schicht eine besonders gute Luftdurchlässigkeit aufweist, die beispielsweise durch das Vorsehen einer Perforation mit geringem Abstand gewährleistet ist.

Zusätzlich oder anstatt einer Lufteintrittsfläche an der Sattelspitze kann eine Belüftung der Polsterschicht von unten erfolgen, indem der Trägerkörper, d.h. beispielsweise eine Kunststoffschale des Sattels, Belüftungsöffnungen aufweist.

Bei einer besonders bevorzugten Ausführungsform ist die Abstandsgewirk-Schicht dreidimensional geformt, d.h. als Raumform ausgebildet. Dies kann durch eine Warmumformung, insbesondere durch Molden, der Abstandsgewirk-Schicht erfolgen. Auf Grund der in dem Abstandsgewirk enthaltenen Kunststofffasern kann durch Zusammendrücken bestimmter Bereiche des Abstandsgewirkes und gleichzeitiges Zuführen von Wärme eine Formgebung erfolgen. Beispielsweise kann hierdurch ein Venenkanal ausgebildet werden.

Selbstverständlich ist es möglich, die vorstehend beschriebenen Ausführungsformen miteinander zu kombinieren.

Nachfolgend wird die Erfindung anhand bevorzugter Ausführungsformen unter Bezugnahme auf die anliegenden Zeichnungen näher erläutert.

Es zeigen:

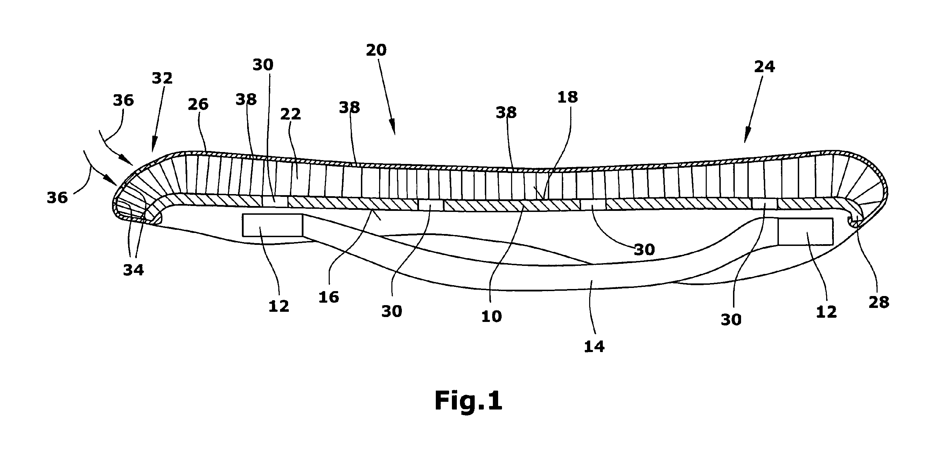

- Fig. 1: einen schematischen Längsschnitt einer ersten Ausführungsform eines Fahrradsattels,
- Fig. 2: einen schematischen Längsschnitt einer zweiten Ausführungsform eines Fahrradsattels und
- Fig. 3: eine schematische Draufsicht einer weiteren bevorzugten Ausführungsform des Fahrradsattels und
- Fig. 4: eine Schnittansicht entlang der Linie IV-IV in Fig. 3.

Der Fahrradsattel weist einen Trägerkörper 10, üblicherweise eine Kunststoffschale, auf. Mit dem Trägerkörper 10 sind geeignete Befestigungselement 12 und Halteelemente 14 verbunden. Bei den Halteelementen 14 handelt es sich üblicherweise um Metallstangen, die über entsprechende Befestigungselemente, wie Schellen u.dgl., mit der Sattelstange verbindbar sind. Die Halteelemente sind an einer Unterseite bzw. Innenseite 16 des Trägerkörpers 10 angeordnet. Auf einer Oberseite 18 des Trägerkörpers 10 ist eine Polsterschicht 20 angeordnet. Die Polsterschicht 20 kann mehrere Lagen aufweisen. Im dargestellten Ausführungsbeispiel weist die Polsterschicht 20 erfindungsgemäß eine Abstandsgewirk-Schicht 22 auf. Die Abstandsgewirk-Schicht 22 erstreckt sich im dargestellten Ausführungsbeispiel über die gesamte Oberseite 18 des Trägerkörpers 10. Es ist jedoch auch möglich, dass die Abstandsgewirk-Schicht 22 nur lokal vorgesehen ist.

Eine Aufgabe der Abstandsgewirk-Schicht 22 ist die Polsterung, so dass die Abstandsgewirk-Schicht vorzugsweise in einem Sitzbereich 24, wie im Beckenbereich, vorgesehen ist. In diesem Bereich kann ggf. eine besonders gute dämpfende bzw. polsternde Abstandsgewirk-Schicht vorgesehen sein oder die Abstandsgewirk-Schicht kann im Sitzbereich 24 mehrlagig ausgebildet sein.

Die Abstandsgewirk-Schicht 22 ist von einer äußeren Material-Lage 26 überspannt. Die Material-Lage 26 ist über einen Rand 28 des Trägerkörpers 10 gezogen und an dessen Unterseite befestigt. Durch die äußere Material-Lage 26 wird somit die Abstandsgewirk-Schicht 22 fixiert. Ebenso ist es möglich, die Abstandsgewirk-Schicht unmittelbar, beispielsweise durch Verkleben, an der Oberseite 18 des Trägerkörpers 10 zu fixieren.

Zur Belüftung der Polsterschicht 20, d.h. insbesondere der Abstandsgewirk-Schicht 22, weist der Trägerkörper 10 Belüftungsöffnungen 30 auf. Bei den Belüftungsöffnungen 30 handelt es sich beispielsweise um durchgehende Öffnungen. Diese können ggf. mit einem luftdurchlässigen Schutzmaterial überzogen oder gefüllt sein, um ein Eindringen von Feuchtigkeit durch die Belüftungsöffnungen 30 zu vermeiden.

Zur weiteren Belüftung der Abstandsgewirk-Schicht 22 sind im Bereich einer Sattelspitze 32 im dargestellten Ausführungsbeispiel eine Vielzahl von Öffnungen 34 vorgesehen, so dass Luft in Richtung der Pfeile 36 in die Polsterschicht 20 einströmen kann. Anstatt des Vorsehens von Öffnungen 34 in diesem Bereich kann auch eine grobmaschige Schicht oder eine luftdurchlässige Schicht vorgesehen sein. In deutlich größerem Abstand weist die äußere Schicht 26 auch an ihrer Oberseite Öffnungen 38 auf, durch die die Luft beispielsweise wieder ausströmen kann.

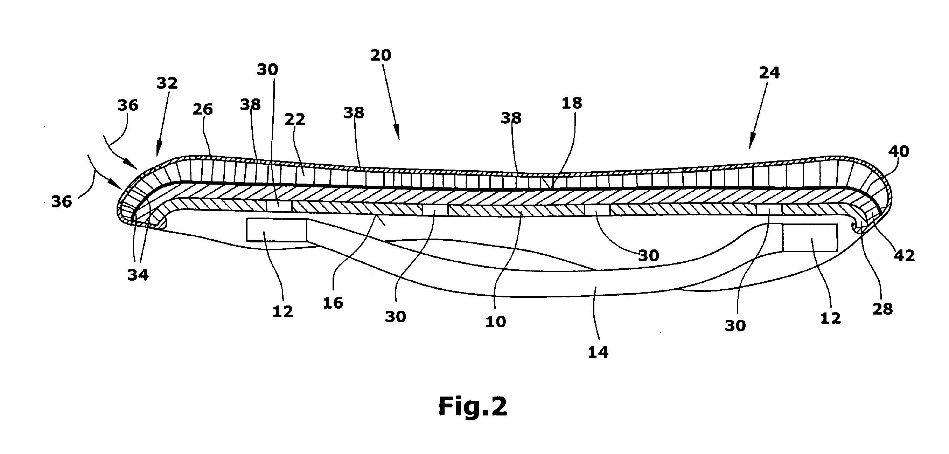

Bei einer weiteren bevorzugten Ausführungsform (Fig. 2) sind dieselben und ähnliche Bestandteile mit denselben Bezugszeichen bezeichnet.

Der in Fig. 2 dargestellte Fahrradsattel unterscheidet sich im Aufbau der Polsterschicht 20. Die Polsterschicht 20 ist in diesem Ausführungsbeispiel mehrlagig ausgebildet. Als oberste Schicht ist eine Material-Lage 26 vorgesehen, wobei diese nicht unbedingt erforderlich ist. Hierunter ist die Abstandsgewirk-Schicht 22 angeordnet. Darunter ist eine feuchtigkeitsabhaltende Lage 40, wie eine goretex-ähnliche Material-Lage vorgesehen. Unter der Lage 40 ist eine Polster-Lage 42 angeordnet, die wiederum auf dem Trägerkörper 10 angeordnet ist. Vom Körper produzierte Feuchtigkeit gelangt somit durch Öffnungen 38 in der Material-Lage 26 zu dem Abstandsgewirk 22 und wird von diesem nach unten transportiert. Die Zwischen-Lage 40 verhindert ein Transportieren der Feuchtigkeit in die Polster-Lage 42.

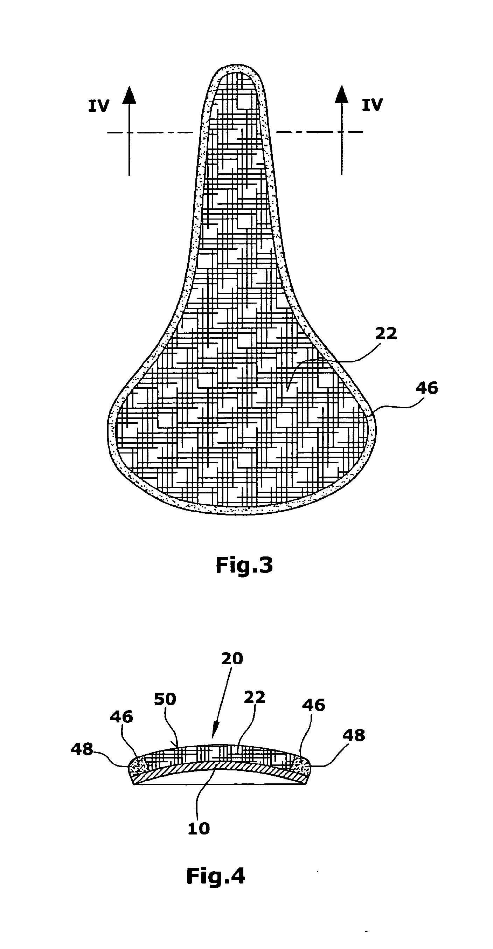

Bei einer weiteren bevorzugten Ausführungsform (Fig. 3 u. 4) erstreckt sich das Abstandsgewirk im Wesentlichen über die gesamte Länge und Breite, d. h. im Wesentlichen über die gesamte Fläche des Trägerkörpers 10. Zur Lagefixierung der Abstandsgewirk-Schicht 22 ist diese innerhalb eines Rahmenelementes 46 angeordnet. Das Rahmenelement 46 verläuft im dargestellten Ausführungsbeispiel entlang des Randes des Trägerkörpers 10 und stellt somit die äußere Begrenzung der gesamten Polsterschicht 20 dar. Das Rahmenelement 46, das vorzugsweise aus einem Polstermaterial, wie Schaumstoff, hergestellt ist, weist vorzugsweise eine abgerundete Außenkante 48 auf.

Das Rahmenelement 46 kann ferner in die Abstandsgewirk-Schicht 22 hineinragende Stege oder Sprossen aufweisen, durch die der Sattelbereich in einzelne mit einer Abstandsgewirk-Schicht 22 versehene Teilbereiche unterteilt wird.

Des weiteren kann eine Oberseite 50 der Abstandsgwirk-Schicht 22 sowie des Rahmenelements 46 mit einer Materiallage überspannt sein.

Insbesondere sind auch Kombinationen der in den Figuren dargestellten Ausführungsbeispiele möglich. Insbesondere die Zwischenlage 40, die beispielsweise aus Goretex oder einem entsprechenden Material hergestellt ist, kann auch unterhalb der Abstandsgewirk-Schicht 22, d. h. zwischen der Abstandsgewirk-Schicht 22 und dem Materialkörper 10 angeordnet sein.

## Patentansprüche

1. Fahrradsattel, mit
einem Trägerkörper (10),
einem mit einer Unterseite (16) des Trägerkörpers (10) verbundenen Halteelement (14) zum Verbinden mit einer Sattelstange und
einer mit einer Oberseite (18) des Trägerkörpers (10) verbundenen Polsterschicht (20),
**dadurch gekennzeichnet, dass**
die Polsterschicht (20) eine Abstandsgewirk-Schicht (22) aufweist.

2. Fahrradsattel nach Anspruch 1, **dadurch gekennzeichnet, dass** die Abstandsgewirk-Schicht zwei im Wesentlichen äquidistant zu einander angeordnete Material-Lagen aufweist, zwischen denen elastische Fasern angeordnet sind.

3. Fahrradsattel nach Anspruch 1 oder 2, **dadurch gekennzeichnet, dass** das Abstandsgewirk derart ausgebildet ist, dass ein Feuchtigkeitstransport in Richtung des Trägerkörpers (10) erfolgt.

4. Fahrradsattel nach einem der Ansprüche 1-3, **dadurch gekennzeichnet, dass** die Abstandsgewirk-Schicht (22) in einem Sitzbereich (24) des Fahrradsattels angeordnet ist.

5. Fahrradsattel nach einem der Ansprüche 1-4, **dadurch gekennzeichnet, dass** die Abstandsgewirk-Schicht (22) die gesamte Oberfläche des Trägerkörpers (10) überspannt.

6. Fahrradsattel nach einem der Ansprüche 1-5, **dadurch gekennzeichnet, dass** die Polster-Schicht (20) ausschließlich aus einer Abstandsgwirk-Schicht (22) besteht.

7. Fahrradsattel nach einem der Ansprüche 1-5, **dadurch gekennzeichnet, dass** die Polsterschicht (20) ein Rahmenelement (46) aufweist, das die Abstandsgewirk-Schicht (22) umgibt.

8. Fahrradsattel nach Anspruch 7, **dadurch gekennzeichnet, dass** das Rahmenelement (46) entlang des Sattelaußenrandes verläuft.

9. Fahrradsattel nach einem der Ansprüche 1-8, **dadurch gekennzeichnet, dass** die Abstandsgewirk-Schicht (22) mehrlagig ist.

10. Fahrradsattel nach einem der Ansprüche 1-9, **dadurch gekennzeichnet, dass** die Abstandsgewirk-Schicht (22) durch Warmumformung als Raumform ausgebildet ist.

11. Fahrradsattel nach einem der Ansprüche 1-10, **dadurch gekennzeichnet, dass** die Polster-Schicht (20) mehrlagig ist und eine Polster-Lage (42) und eine Abstandsgewirk-Lage (22) aufweist und zwischen der Polster-Lage (42) und der Abstandsgewirk-Lage (22) eine feuchtigkeitsabhaltende Lage (40) vorgesehen ist.

12. Fahrradsattel nach einem der Ansprüche 1-11, **dadurch gekennzeichnet, dass** eine äußere Material-Lage (26) der Polsterschicht (20) luftdurchlässig und/ oder feuchtigkeitsdurchlässig ist.

13. Fahrradsattel nach einem der Ansprüche 1-12, **dadurch gekennzeichnet, dass** an einer Sattelspitze (32) eine Lufteintrittsfläche zum Zuführen von Luft in die Polsterschicht (20), insbesondere in die Abstandsgewirk-Schicht (22), ausgebildet ist.

14. Fahrradsattel nach einem der Ansprüche 1-13, **dadurch gekennzeichnet, dass** der Trägerkörper (10) Lüftungsöffnungen (30) aufweist.
